# EUROPÄISCHE PATENTANMELDUNG

(11) **EP 4 822 302 A1**
(43) Veröffentlichungstag der Anmeldung: **14.10.2026**
(21) Anmeldenummer: 26165850.4
(22) Anmeldetag: 18.03.2026
(51) Int. Cl.: G01D 11/24

(54) **SENSORVORRICHTUNG**

(30) Priorität: 07.04.2025 DE 202025101888 U
(71) Anmelder: KNDS Deutschland GmbH & Co. KG, 80997 München (DE)
(72) Erfinder: Fischer, Thomas, 34127 Kassel (DE); Wenderoth, Kai, 34127 Kassel (DE); Herath, Benjamin, 34127 Kassel (DE)
(74) Vertreter: Feder Walter Ebert

(57) **Zusammenfassung**

Die Erfindung betrifft eine Sensorvorrichtung (10) zum Einsatz in einem militärischen Fahrzeug mit einem Sensorkopf (1) zur Erfassung einer Messgröße und einem mit dem Sensorkopf (1) kabelverbundenen Stecker (2) zum Anschluss an eine Verarbeitungseinheit, wobei ein Adapter (3) zur mechanischen Adaption (3) des Sensorkopfes (1) an den Stecker (2) vorgesehen ist.

## Beschreibung

Die Erfindung betrifft eine Sensorvorrichtung zum Einsatz in einem militärischen Fahrzeug mit einem Sensorkopf zur Erfassung einer Messgröße und einem mit dem Sensorkopf kabelverbundenen Stecker zum Anschluss an eine Verarbeitungseinheit. Weiterhin betrifft die Erfindung ein Verfahren zur Herstellung einer solchen Sensorvorrichtung und die Verwendung eines Sensorkopfes in einem militärischen Fahrzeug.

Sensorvorrichtungen bestehen im Wesentlichen aus zwei Elementen, nämlich dem eigentlichen Sensorkopf, der eine bestimmte Messgröße erfasst, und einem mit dem Sensorkopf in der Regel kabelverbundenen Stecker, über welchen die Sensorvorrichtung an eine Verarbeitungseinheit, wie bspw. einen Computer zur Anzeige oder zur Weiterverarbeitung der Messsignale, angeschlossen werden kann. Entsprechende Sensorvorrichtungen sind als fest zusammenhängende Komponenten am Markt in einer breiten Palette erhältlich, d. h. der jeweilige Sensorkopf und der Stecker sind fest miteinander verbunden.

Solche Sensorvorrichtungen werden in ganz unterschiedlichen Bereichen der Technik eingesetzt. Ein spezielles Einsatzgebiet stellen militärische Fahrzeuge, wie bspw. Rad-, Ketten- oder auch Wasserfahrzeuge, dar, da hier besondere Anforderungen an die Sensorvorrichtungen gestellt werden. Um entsprechende Sensorvorrichtungen in militärischen Fahrzeugen einsetzen zu können, müssen diese nämlich gewisse militärische Standards erfüllen und insbesondere müssen diese sehr robust und zuverlässig sein. Denn gerade beim Einsatz in militärischen Fahrzeugen kommt es oftmals zu großen Erschütterungen und Vibrationen, aber auch hohe Temperaturen, hohe Luftfeuchtigkeit und eine hohe Verdreckungsgefahr können den Sensorvorrichtungen zu schaffen machen. Entsprechende Sensorvorrichtungen weisen daher sowohl einen Stecker als auch einen Sensorkopf auf, die beide einem militärischen Standard entsprechen.

Sensorvorrichtungen, die keinem militärischen Standard, sondern bspw. nur einem Industriestandard entsprechen, können in der Regel bei militärischen Fahrzeugen nicht eingesetzt werden. Insofern ist es erforderlich, auf mitunter sehr hochpreisigen Sensorvorrichtungen zurückzugreifen, die dem geforderten Militärstandard Rechnung tragen.

Solche Sensorvorrichtungen weisen, insbesondere hinsichtlich der Ausgestaltung der Stecker, bestimmte Sicherheitsmerkmale auf, so dass es bspw. auch bei Vibrationen oder Erschütterungen nicht dazu kommen kann, dass sich der Stecker von der Verarbeitungseinheit lösen kann.

Die Erfindung stellt sich davon ausgehend die **Aufgabe**, eine Sensorvorrichtung anzugeben, die in einem militärischen Fahrzeug eingesetzt werden kann und die insofern die geltenden Militärstandards erfüllt, die sich jedoch darüber hinaus mit geringen Kosten herstellen lässt.

Diese Aufgabe wird bei einer Sensorvorrichtung der eingangs genannten Art dadurch **gelöst**, dass ein Adapter zur mechanischen Adaption des Sensorkopfes an den Stecker vorgesehen ist.

Durch den Adapter können verschiedene Sensorköpfe mit verschiedenen Steckern kombiniert werden. Der Adapter ermöglicht somit eine Verbindung eines bestimmten Sensorkopfes mit einem bestimmten Stecker. Insofern lassen sich Sensorköpfe und Stecker variabel miteinander kombinieren und eine Abhängigkeit von am Markt verfügbaren Kombinationen entfällt. Insbesondere ist man für Sensorvorrichtungen, die dem Militärstandard entsprechen müssen, nicht mehr darauf angewiesen, solche zu hohen Preisen am Markt zu erwerben. Denn oftmals genügt es bereits, wenn der Stecker einen Militärstandard erfüllt, und der Adapter erlaubt dann eine Adaption des ansonsten nicht in einem militärischen Fahrzeug einsetzbaren Sensorkopfes an den Stecker. Es können somit Sensorköpfe und Stecker anhand der konkreten Anforderungen eines Einzelfalls ausgewählt und über den Adapter aneinander adaptiert werden.

Ferner hat es sich als vorteilhaft herausgestellt, wenn der Stecker über den Adapter mechanisch an den Sensorkopf koppelbar ist. Durch die mechanische Kopplung können der Stecker und der Sensorkopf nach der Adaption fest miteinander verbunden sein, so dass die Sensorvorrichtung dann als ein zusammenhängendes Teil verwendet und eingesetzt werden kann. Eine Relativbewegung zwischen Sensorkopf und Stecker ist dann nicht mehr möglich. Der Sensorkopf und der Stecker können miteinander kabelverbunden sein, so dass das von dem Sensorkopf ausgegebene Signal durch das Kabel an den Stecker geleitet werden kann. Über den Stecker können die Signale dann zur Weiterverarbeitung an die Verarbeitungseinheit geleitet werden. Bei der Weiterverarbeitungseinheit kann es sich bspw. um eine Anzeige, eine Auswerteeinheit, eine Speichereinheit, einen Datenlogger, eine Kommunikationseinheit oder Ähnliches handeln. Insgesamt kann die Weiterverarbeitungseinheit somit als Recheneinheit ausgebildet sein.

Gemäß einer vorteilhaften Weiterbildung der Erfindung ist vorgesehen, dass der Stecker als Sicherheitsstecker ausgebildet ist. Ein Sicherheitsstecker zeichnet sich dadurch aus, dass sich dieser auch bei starken Vibrationen über einen längeren Zeitraum nicht unbeabsichtigt von der Verarbeitungseinheit löst. Bei der Verwendung eines normalen Industriesteckers kann hingegen die Gefahr bestehen, dass sich dieser unbeabsichtigt von der Verarbeitungseinheit löst.

Der Stecker kann zur Verbindung mit der Verarbeitungseinheit einen Anschlussabschnitt aufweisen, über den er lösbar mit der Verarbeitungseinheit verbunden werden kann. Insbesondere dieser Anschlussabschnitt kann dabei derart ausgestaltet sein, dass eine unbeabsichtigte Lösung des Steckers verhindert wird. Dafür kann der Stecker, bspw. mit der Verarbeitungseinheit, verklemmt oder verschraubt werden. Vorzugsweise ist der Abschlussabschnitt als Klemmabschnitt, als Schraubabschnitt oder als Bajonettabschnitt zur Herstellung einer Bajonettverbindung mit der Verarbeitungseinheit ausgebildet. Diese Verbindungen verhindern eine axiale Bewegung des Steckers gegenüber der Verarbeitungseinheit, so dass der Stecker nicht einfach abgezogen und sich insofern auch möglichst nicht von alleine lösen kann. Gleichwohl ist aber vorzugsweise eine werkzeugfreie Demontage bzw. Lösung des Steckers und der Verarbeitungseinheit gegeben. Zu Schaubverbindung kann der Anschlussabschnitt mit einem Gewinde versehen sein. Zur Realisierung einer Bajonettverbindung kann der Anschlussabschnitt mehrere, insbesondere mindestens zwei, seitlich vorspringende Bajonettbolzen aufweisen.

Als besonders vorteilhaft hat es sich herausgestellt, wenn der Stecker, insbesondere der Anschlussabschnitt, einem Militärstandard genügt. Der Stecker kann somit als Militärstecker ausgebildet sein. Durch den Militärstandard kann sichergestellt werden, dass die gesamte Sensoreinrichtung in einem militärischen Fahrzeug eingesetzt werden kann. Nur wenn ein Element einem Militärstandard entspricht, kann es in einem militärischen Fahrzeug eingesetzt werden. Die entsprechenden Elemente sind somit zum Einsatz in einem militärischen Fahrzeug vorgesehen und auch bestimmt. Dahingehend hat es sich als vorteilhaft herausgestellt, wenn der Sensorkopf hingegen nur einem Industriestandard entspricht. Der Sensorkopf kann somit ein ziviler oder ein industrieller Sensorkopf bzw. ein Zivilsensorkopf oder ein Industriesensorkopf sein. Solche Sensorköpfe sind sehr breit am Markt verfügbar und vergleichsweise preiswert. Allerdings können am Markt erhältliche Sensorvorrichtungen mit solchen Sensorköpfen in der Regel nicht in militärischen Fahrzeugen eingesetzt werden, da die entsprechenden Sensorvorrichtungen dann insgesamt nicht dem Militärstandard entsprechen. Der Sensorkopf an sich ist somit nicht zum Einsatz in einem militärischen Fahrzeug vorgesehen und bestimmt.

Insofern kann durch den Adapter erreicht werden, dass ein vergleichsweise preisgünstiger Sensorkopf ohne besondere militärische Eignung mit einem Stecker kombiniert werden kann, der eine spezielle militärische Eignung aufweist und der den einschlägigen Militärstandards entspricht. Die Eignung des Steckers kann bereits ausreichend sein, um die gesamte Sensorvorrichtung in einem militärischen Bereich einsetzen zu können. Da insofern lediglich der Stecker den hohen militärischen Anforderungen genügen muss, der Sensorkopf jedoch als normaler und in der Industrie flächendeckend eingesetzter Sensorkopf ausgebildet sein kann und insbesondere nicht zum Einsatz in einem militärischen Fahrzeug geeignet und bestimmt sein muss, lassen sich die Gesamtkosten deutlich reduzieren.

Der Sensorkopf kann eine vorgegebene physikalische Größe erfassen. Beispielsweise kann über den Sensorkopf eine Temperatur, ein Druck, die absolute oder relative Feuchtigkeit, ein Abstand, ein Gewicht oder auch eine chemische Zusammensetzung gemessen werden. Der Sensorkopf kann aus den ermittelten Größen Messsignale erzeugen, die dann über eine Kabelverbindung zum Stecker geleitet werden können. Der Sensorkopf kann bspw. als induktiver Näherungsschalter oder als Drucksensor ausgebildet sein.

Der Adapter kann zur Verbindung mit dem Stecker und mit dem Sensorkopf jeweils eine entsprechende mechanische Schnittstelle aufweisen. Die Schnittstelle zur Verbindung des Adapters mit dem Stecker kann als Steckerverbindungsabschnitt und die Schnittstelle zur Verbindung des Adapters mit dem Sensorkopf als Sensorverbindungsabschnitt ausgebildet sein. Der Stecker und/oder der Sensorkopf können mit den entsprechenden Schnittstellen des Adapters lösbar verbunden, insbesondere verschraubt, sein. Dabei kann vorgesehen sein, dass der Stecker und/oder der Sensorkopf in die jeweilige Schnittstelle eingeschraubt oder auf diese aufgeschraubt ist. Alternativ oder zusätzlich kann auch eine untrennbare Verbindung vorgesehen sein, bspw. eine Klebeverbindung. Der Adapter kann über die jeweiligen Schnittstellen einem Militärstandard entsprechend mit dem Stecker und dem Sensorkopf verbunden werden bzw. sein. Ferner kann auch der Adapter selbst einem Militärstandard entsprechen, so dass vorteilhaft lediglich der Sensorkopf an sich keinem Militärstandard genügt und alleine nicht in einem militärischen Fahrzeug eingesetzt werden kann.

Im Hinblick auf die Verbindung zwischen Adapter und Sensorkopf hat es sich in konstruktiver Hinsicht als vorteilhaft herausgestellt, wenn der Adapter einen Einschraubabschnitt aufweist, über den er in den Sensorverbindungsabschnitt des Adapters einschraubbar ist. Über eine entsprechende Schraubverbindung kann der Sensorkopf fest mit dem Adapter verbunden werden. Der Einschraubabschnitt kann mit einem Außengewinde versehen sein und der Adapter bzw. der Sensorverbindungsabschnitt kann entsprechend mit einem Innengewinde ausgestattet sein, so dass der Sensorkopf nach Art einer Schraube in den Adapter eingeschraubt werden kann. Der Sensorkopf kann dabei nicht vollständig in den Adapter eingeschraubt sein, sondern der eigentliche Messabschnitt, also der Teil des Sensorkopfes, der die aufzunehmende Messgröße erfasst, kann nicht in den Adapter eingeschraubt sein, sondern aus diesem herausragen.

Um den Eintrag von Schmutz oder auch Wasser zu verhindern, kann ein Dichtelement, insbesondere ein Dichtring, vorgesehen sein, das den Sensorkopf gegenüber dem Adapter abdichtet. Ferner kann vorgesehen sein, dass der Sensorkopf bzw. der Einschraubabschnitt zusätzlich in den Adapter eingeklebt ist. Dafür kann auf den Einschraubabschnitt ein Klebstoff aufgebracht werden, der nach dem Einschrauben trocknet und aushärtet. Bei dieser Ausgestaltung ist der Sensorkopf dann unlösbar mit dem Adapter verbunden. Zudem bietet diese Ausgestaltung auch im Hinblick auf den Eintrag von Schmutz und/oder Wasser ebenfalls Vorteile.

Zur Sicherung des Sensorkopfes im bzw. am Adapter kann ferner eine Überwurfmutter vorgesehen sein. Diese kann von außen auf den Sensorkopf aufgeschraubt werden, bis sie an dem Adapter anliegt. Die Überwurfmutter stellt eine weitere oder eine alternative Möglichkeit dar, den Sensorkopf fest mit dem Adapter zu verbinden. Wenn die Überwurfmutter festgezogen ist, ist der Sensorkopf im Adapter gesichert, so dass sich dieser auch nach längerer Zeit nicht wieder von dem Adapter lösen kann. Um die Überwurfmutter auf den Sensorkopf aufzuschrauben, kann auch der Messabschnitt, zumindest teilweise, mit einem Außengewinde versehen sein, auf welches die Überwurfmutter aufgeschraubt werden kann.

Insgesamt ist die Verbindung zwischen Adapter und Sensorkopf mechanisch so stabil, dass diese einem Militärstandard entspricht und in einem militärischen Fahrzeug verwendet werden kann. Ein Lösen des Sensorkopfes von dem Adapter kann daher auch bei größerer oder bei lang andauernder Krafteinwirkung zuverlässig verhindert werden.

Hinsichtlich der Verbindung zwischen Adapter und Stecker hat es sich als vorteilhaft herausgestellt, wenn der Steckerverbindungsabschnitt als Flansch ausgebildet ist, wobei der Stecker über eine Schraubverbindung mit dem Flansch verbindbar ist. Der Stecker kann über mehrere Schrauben, insbesondere über vier Schrauben, die um den Umfang des Steckers gleichmäßig verteilt angeordnet sind, mit dem Adapter bzw. mit dem Flansch verschraubt werden. Der Flansch kann einen im Wesentlichen quadratischen Querschnitt aufweisen und somit eine gewisse Auflagefläche für den Stecker bereitstellen. Der Stecker kann einen Verbindungsflansch aufweisen, der hinsichtlich seiner geometrischen Ausdehnung an die Größe des Flansches des Adapters angepasst sein kann. Der Verbindungsflansch kann flächig auf dem Flansch aufliegen und die Schrauben können sich zur Verbindung durch den Verbindungsflansch bis in oder durch den Flansch erstrecken.

Insgesamt ist die Verbindung zwischen Adapter und Stecker mechanisch so stabil, dass diese einem Militärstandard entspricht und in einem militärischen Fahrzeug verwendet werden kann. Ein Lösen des Steckers von dem Adapter kann daher auch bei größerer oder bei lang andauernder Krafteinwirkung zuverlässig verhindert werden.

Der Anschlussabschnitt des Steckers kann gegenüber dem Verbindungsflansch hervorstehen und insofern nicht innerhalb des Adapters angeordnet sein. Somit ist der Anschlussabschnitt von außen zugänglich und kann auf vergleichsweise einfache Art und Weise mit der Verarbeitungseinheit verbunden werden. In dem dem Anschlussabschnitt gegenüberliegenden Ende kann der Stecker einen Einsteckabschnitt aufweisen, der vorteilhaft eine zylinderförmige Geometrie aufweist und der bis in das Innere des Adapters hineinragen kann. Der Steckverbindungsabschnitt kann eine kreisförmige Öffnung aufweisen, in die der Einsteckabschnitt eintauchen kann. Wenn der Einsteckabschnitt entsprechend eingesteckt ist, kann der Flansch an dem Verbindungsflansch anliegen und der Stecker kann dann über Schrauben mit dem Adapter verbunden werden. Um das Innere des Adapters vor Schmutz und Wasser zu schützen, können geeignete Dichtelemente vorgesehen sein. Beispielsweise kann zwischen dem Flansch und dem Verbindungsflansch eine Flachdichtung vorgesehen sein.

Gemäß einer vorteilhaften Weiterbildung der Erfindung ist vorgesehen, dass die Kabel zur Verbindung des Sensorkopfes und des Steckers durch den Adapter verlaufen. Der Adapter sorgt somit für einen Schutz der Kabel vor äußeren Einflüssen und insbesondere vor Krafteinwirkungen von außen. Vorteilhaft ist der Adapter insgesamt staub- und wasserdicht, so dass die Kabel im Inneren gegen äußere Einflüsse gut geschützt sind. Der Adapter kann somit einen inneren Hohlraum aufweisen, der die beiden Schnittstellen bzw. den Sensorverbindungsabschnitt und den Steckerverbindungsabschnitt miteinander verbindet, so dass die Kabel von dem Sensorkopf durch den Adapter zu dem Stecker reichen können. Der Adapter kann die Kabel umfangsseitig ummanteln.

Im Hinblick auf den Adapter hat es sich weiterhin als vorteilhaft herausgestellt, wenn der Adapter als Adaptergehäuse ausgebildet ist. Das Adaptergehäuse kann der Sensorvorrichtung somit eine ausreichende Stabilität verleihen und auch eine feste Verbindung mit dem Stecker auf der einen Seite und dem Sensorkopf auf der anderen Seite ermöglichen. Das Adaptergehäuse kann zwischen dem Sensorkopf und dem Stecker angeordnet sein, das heißt, der Sensorkopf und der Stecker können auf gegenüberliegenden Seiten des Adaptergehäuses angeordnet sein. Das Adaptergehäuse kann aus Metall, insbesondere aus Stahl, bestehen, um somit die Komponenten fest miteinander zu verbinden und eine ausreichende mechanische Stabilität aufzuweisen, um auch in einem militärischen Fahrzeug eingesetzt werden zu können. Die Wandstärke des Adapters bzw. des Adaptergehäuses kann so gewählt sein, dass diese auch im militärischen Bereich zu erwartenden Krafteinflüssen standhält. Bei Adaptern, die nur einem Industrie- bzw. einem Zivilstandard genügen, ist dies nicht der Fall. Diese können nicht in einem militärischen Fahrzeug eingesetzt werden. Das Adaptergehäuse kann in geometrischer Hinsicht an den Stecker und/oder an den Sensorkopf angepasst sein. Somit kann auch die Größe unterschiedlicher Sensorköpfe und/oder Stecker berücksichtigt werden.

Ferner kann über das Adaptergehäuse eine ausreichende Abschirmung gegen Umwelteinflüsse sowie auch gegen elektromagnetische Strahlung erreicht werden. Das Adaptergehäuse kann als Fräs- oder als Drehteil ausgebildet sein. Insgesamt kann das Adaptergehäuse einen rechteckigen oder einen quadratischen Querschnitt aufweisen.

Gemäß einer vorteilhaften Weiterbildung ist vorgesehen, dass der Sensorkopf und der Stecker in einer Achse liegen. Bei dieser Ausgestaltung kann die Sensorvorrichtung insgesamt eine eher längliche Geometrie aufweisen. Der Adapter kann insofern röhrenförmig ausgestaltet sein und der Adapter kann sich in Längsrichtung zwischen dem Stecker und dem Sensorkopf erstrecken.

Gemäß einer alternativen Ausgestaltung ist es jedoch auch möglich, dass der Sensorkopf und der Stecker winkelig, insbesondere in einem rechten Winkel, zueinander angeordnet sind. In Abhängigkeit von den äußeren Gegebenheiten, bspw. in Abhängigkeit der Ausrichtung der Anschlüsse der Verarbeitungseinheit und der erforderlichen Ausrichtung des Sensorkopfes zur Erfassung der relevanten Messgrößen, kann eine winkelige Anordnung gegenüber einer Anordnung in einer Achse vorteilhaft sein. Der Adapter kann bei dieser Ausgestaltung entsprechend abgewinkelt sein. Wenn der Stecker und der Sensorkopf in einem rechten Winkel zueinander angeordnet sind, kann der Adapter in einer Seitenansicht eine im Wesentlichen L-förmige Geometrie aufweisen.

Weiterhin wird im Hinblick auf die eingangs genannte Aufgabe ein Verfahren zur Herstellung einer Sensorvorrichtung, insbesondere zur Herstellung einer Sensorvorrichtung, so wie sie vorstehend beschrieben wurde, vorgeschlagen. Das Verfahren umfasst die folgenden Schritte:
- Bereitstellen eines Sensorkopfes , insbesondere Bereitstellen einer Sensoreinheit mit einem Sensorkopf und einem Anschlussstecker;
- Entfernen des Sensorkopfes von dem Anschlussstecker;
- Bereitstellen eines Steckers, insbesondere eines Sicherheitssteckers;
- Bereitstellen eines Adapters zur Adaption des Sensorkopfes an den Stecker
- Verbinden des Sensorkopfes und des Steckers über ein Kabel;
- Mechanisches Verbinden des Sensorkopfes und des Steckers mit dem Adapter.

Die Reihenfolge der Verfahrensschritte ist dabei nicht auf die obenstehend angegebene Reihenfolge beschränkt.

Zunächst wird ein Sensorkopf bereitgestellt. Bei diesem handelt es sich insbesondere um einen Sensorkopf, der keinem Militärstandard genügt und der insofern nicht ohne Weiteres in einem militärischen Fahrzeug eingesetzt werden kann. Es wird dahingehend auch auf die obenstehenden Ausführungen zu dem Sensorkopf der Sensorvorrichtung verwiesen. Die Bereitstellung des Sensorkopfes kann durch die Extraktion eines Sensorkopfes aus einer insbesondere zivilen und lediglich einem Industriestandard genügenden Sensoreinheit erfolgen. Dafür kann zunächst eine Sensoreinheit bereitgestellt werden. Diese Sensoreinheit umfasst einen Sensorkopf und einen Anschlussstecker und erfüllt insbesondere keinen militärischen Standard, so dass diese Sensoreinheit nicht in einem militärischen Fahrzeug eingesetzt werden kann bzw. darf. Vielmehr handelt es sich um eine vergleichsweise günstige Sensoreinheit, die üblicherweise im zivilen Bereich bzw. in der Industrie eingesetzt wird.

In einem nächsten Schritt wird der Anschlussstecker von dem Sensorkopf entfernt. In der Regel sind der Anschlussstecker und der Sensorkopf über ein Kabel miteinander verbunden. Dieses Kabel kann durchtrennt werden, so dass dann der Sensorkopf und der Anschlussstecker nicht mehr zusammenhängen. Sofern der Anschlussstecker und der Sensorkopf auch mechanisch miteinander gekoppelt sind, kann auch diese Koppelung aufgehoben werden, so dass am Ende zwei separate Bauteile vorliegen. Sowohl bei dem Anschlussstecker als auch bei dem Sensorkopf kann es sich um Elemente aus dem zivilen bzw. industriellen Bereich handeln. Diese sind somit nicht zum Einsatz in einem militärischen Fahrzeug geeignet und bestimmt. Am Ende wurde somit ein Sensorkopf aus einer Sensoreinheit extrahiert, so dass dieser als Einzelteil zur Herstellung der Sensorvorrichtung verwendet werden kann. Im Hinblick auf die Ausgestaltung des Sensorkopfes wird auf die obenstehenden Ausführungen zu der beschriebenen Sensorvorrichtung verwiesen.

In einem nächsten Schritt wird ein Stecker, insbesondere ein Sicherheitsstecker, bereitgestellt. Im Hinblick auf die Ausgestaltung dieses Steckers wird auf die obenstehenden Ausführungen zu der beschriebenen Sensorvorrichtung verwiesen. Der Stecker erfüllt somit vorteilhaft einen Militärstandard und ist somit in einem militärischen Fahrzeug einsetzbar bzw. für einen entsprechenden Einsatz geeignet und bestimmt.

In einem nächsten Schritt wird ein Adapter zur Adaption des Sensorkopfes an den Stecker bereitgestellt. Im Hinblick auf die Ausgestaltung des Adapters wird auf die obenstehenden Ausführungen zu der beschriebenen Sensorvorrichtung verwiesen.

Dann werden der Sensorkopf und der Stecker über ein Kabel miteinander verbunden, so dass ein elektrischer Kontakt zwischen dem Sensorkopf und dem Stecker vorherrscht. Dabei kann vorgesehen sein, dass das Kabel des Sensorkopfes verwendet wird, welches zunächst mit dem Anschlussstecker der zivilen Sensoreinheit verbunden war. Ferner kann vorgesehen sein, dass das Kabel abisoliert wird, um dieses mit dem neuen Stecker zu verbinden.

Schließlich werden der Sensorkopf und der Stecker über den Adapter mechanisch miteinander verbunden. Der Sensorkopf und der Stecker werden dafür fest mit dem Adapter verbunden, so wie dies vorstehend auch schon beschrieben wurde. Es kann dabei auch vorgesehen sein, dass zunächst der Stecker oder der Sensorkopf mit dem Adapter verbunden werden, dann der Sensorkopf und der Stecker über ein Kabel miteinander verbunden werden und dann das entsprechend zweite Element mit dem Adapter verbunden wird.

Weiterhin wird die Verwendung eines einem Industriestandard genügenden Sensorkopfes in einem militärischen Fahrzeug vorgeschlagen. Dabei ist vorgesehen, dass der Sensorkopf keinen Militärstandard erfüllt und dass der Sensorkopf über einen Adapter mit einem einem Militärstandard genügenden Stecker, also einem Militärstecker, verbunden ist. Durch diese Adaption des Sensorkopfes an den Stecker kann der ansonsten keine militärische Zulassung und nicht in einem militärischen Fahrzeug einsetzbare Sensorkopf trotzdem in einem militärischen Fahrzeug eingesetzt werden. Die Verwendung eines in einem militärischen Fahrzeug verwendbaren Sensorkopfes, der insofern die erforderliche Zulassung aufweist und einen Militärstandard erfüllt, wäre zwar alternativ möglich, die Verwendung eines solchen Militärsensors wäre jedoch doch deutlich teurer. Im Hinblick auf die Ausgestaltung des Sensorkopfes, des Steckers und des Adapters wird auf die obenstehenden Ausführungen verwiesen. Insgesamt kann somit auch die vorstehend bereits beschriebene Sensorvorrichtung in einem militärischen Fahrzeug verwendet werden.

Im Übrigen wird hinsichtlich der Ausgestaltung der Sensoreinheit auf Obenstehendes verwiesen.

Weitere Einzelheiten und Vorteile der Erfindung sollen nachfolgend anhand der beigefügten Zeichnungen näher erläutert werden. Darin zeigt:
- Fig. 1: einen Adapter für eine Sensorvorrichtung in verschiedenen perspektivischen Ansichten gemäß einem ersten Ausführungsbeispiel;
- Fig. 2: eine Sensorvorrichtung in einer perspektivischen Ansicht gemäß einem ersten Ausführungsbeispiel;
- Fig. 3: die Sensorvorrichtung gemäß Fig. 2 in einer Draufsicht;
- Fig. 4: einen Adapter für eine Sensorvorrichtung in verschiedenen perspektivischen Ansichten gemäß einem zweiten Ausführungsbeispiel;
- Fig. 5: eine Sensorvorrichtung in einer perspektivischen Ansicht gemäß einem zweiten Ausführungsbeispiel;
- Fig. 6: die Sensorvorrichtung gemäß Fig. 5 in einer Draufsicht;
- Fig. 7: eine Explosionsansicht einer Sensorvorrichtung;
- Fig. 8: ein Flussdiagramm mit den Schritten zur Herstellung einer Sensorvorrichtung.

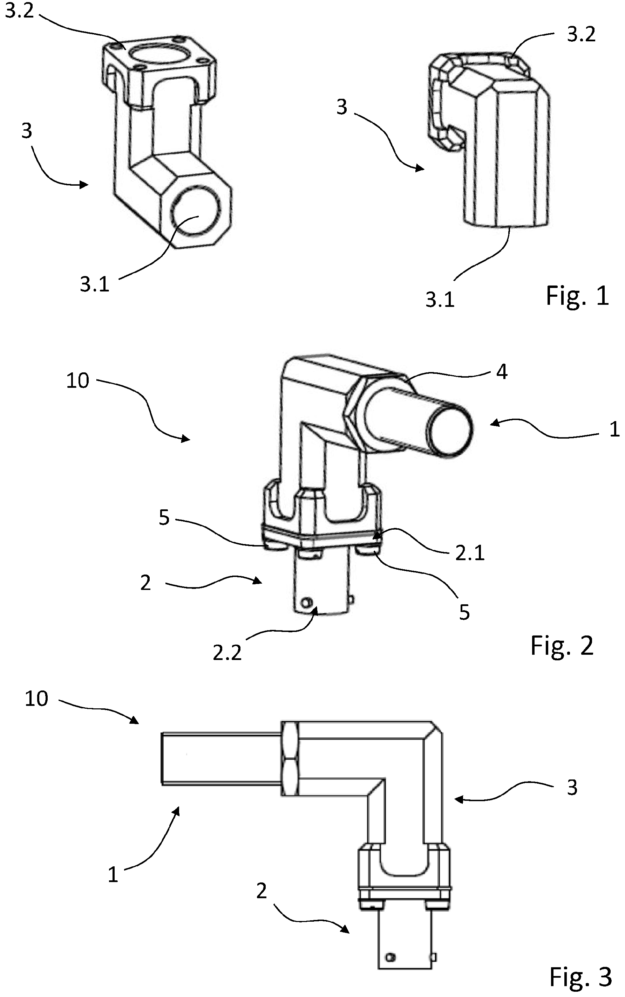

Die Darstellungen der Fig. 1 zeigen zunächst einen als Gehäuse ausgebildeten Adapter 3, über den ein Sensorkopf 1 mit einem Stecker 2 mechanisch verbunden werden kann. Der Adapter 3 weist dabei in einer Seitenansicht eine L-förmige Geometrie auf, so wie dies auch anhand der Darstellung der Fig. 3 zu erkennen ist. Das heißt, der Sensorkopf 1 und der Stecker 3 sind in einem rechten Winkel zueinander angeordnet. Die Darstellung der Fig. 2 lässt den mit dem Adapter 3 verbundenen Sensorkopf 1 sowie den Stecker 2 erkennen. Der Adapter 3 zusammen mit dem Sensorkopf 1 und dem Stecker 3 bilden zusammen eine Sensorvorrichtung 10.

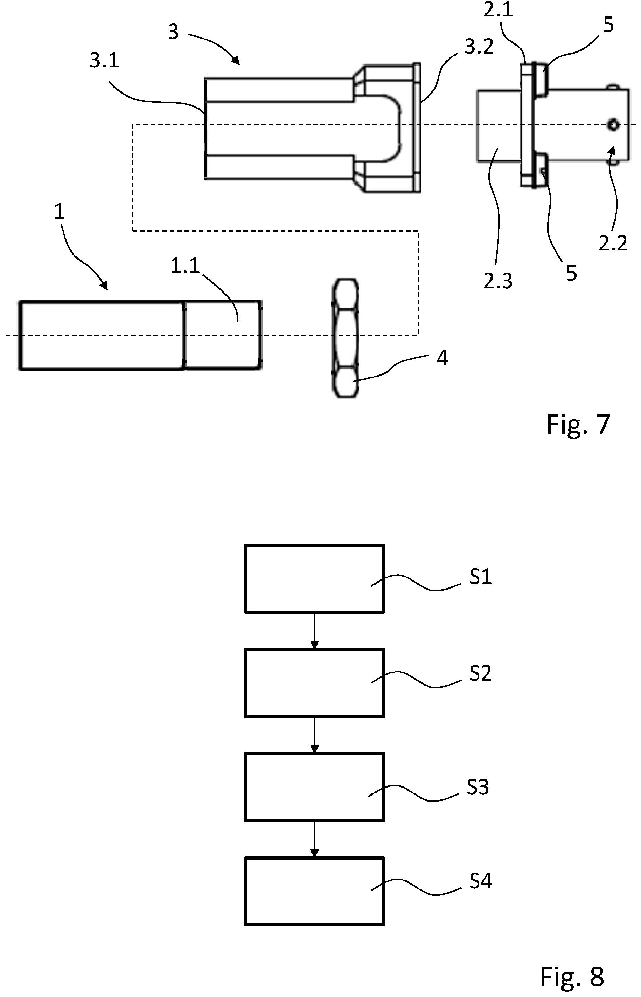

Der Sensorkopf 1 ist in den gezeigten Ausführungsbeispielen als Näherungsschalter ausgebildet und von zylinderförmiger Geometrie. Der Sensorkopf 1 und der Stecker 2 sind auch in der Explosionsansicht gemäß Fig. 7 zu erkennen. Der Stecker 2 besteht im Wesentlichen aus drei verschiedenen Abschnitten, nämlich einem Anschlussabschnitt 2.2, über den der Stecker 2 an eine Verarbeitungseinheit angeschlossen werden kann, einem Einsteckabschnitt 2.3, der im verbundenen Zustand in den Adapter 3 hineinreicht, sowie einem dazwischen angeordneten Verbindungsflansch 2.1, über den der Stecker 2 mit dem Adapter 3 verbunden werden kann.

Zur Verbindung weist der Adapter 3 einen Steckerverbindungsabschnitt 3.2 auf, der einen Flansch aufweist, so wie dies in den Darstellungen zu erkennen ist. Zur Verbindung wird nun zunächst der Einsteckabschnitt 2.3 des Steckers in den Adapter 3 eingeführt. Der Adapter 3 weist dafür im Bereich des Steckerverbindungsabschnitts 3.2 eine entsprechende Öffnung auf. Der Anschlussabschnitt 2.2 führt somit auch zu einer gewissen Zentrierwirkung des Steckers 2. Wenn der Verbindungsflansch 2.1 auf dem Flansch des Adapters 3 aufliegt, kann der Stecker 2 über mehrere Schrauben 5 mit dem Adapter 3 verbunden werden. Die Gewindeabschnitte der Schrauben 5 sind in der Darstellung der Fig. 7 nicht mit dargestellt. Die im Ausführungsbeispiel vorgesehenen vier Schrauben erstrecken sich durch den Verbindungsflansch 2.1 des Steckers 2 und sind dann in den Adapter 3 einschraubbar. Zudem kann auch noch eine in den Darstellungen nicht mit dargestellte Dichtung vorgesehen sein, so dass kein Schmutz oder Wasser von Seiten des Steckerverbindungsabschnitts 3.2 in das Innere des Adapters 3 eindringen kann.

Der Anschlussabschnitt 2.2 des Steckers 2 ist von zylinderförmiger Geometrie und dieser weist mehrere in radialer Richtung vorstehende Bajonettbolzen auf. Durch diese Bajonettbolzen kann eine Bajonettverbindung mit einer Verarbeitungseinheit hergestellt werden, die sich nicht unabsichtlich wieder lösen kann bzw. bei lang anhaltenden Erschütterungen. Demnach ist der Stecker 2 als Sicherheitsstecker ausgebildet.

Auf der anderen Seite weist das Gehäuse bzw. der Adapter 3 eine Schnittstelle für den Sensorkopf 1 auf, die als Sensorverbindungsabschnitt 3.1 ausgebildet ist. Der Sensorkopf 1 weist einen Einschraubabschnitt 1.1 auf, der in der Darstellung der Fig. 7 zu erkennen ist. Dieser ist mit einem Außengewinde versehen, so dass der Sensorkopf 1 in den Adapter 3 einschraubbar ist. Ein Teil des Sensorkopfes 1 ragt jedoch auch nach dem Einschrauben noch aus dem Adapter 3 hervor. Bei diesem Teil handelt es sich um den eigentlichen Messabschnitt, über welchen der Abstand zu einem anderen Element ermittelt werden kann.

Um den Sensorkopf 1 zuverlässig im Adapter 3 zu sichern, ist eine Überwurfmutter 4 vorgesehen. Diese kann auf den Messabschnitt aufgeschraubt werden, der ebenfalls mit einem Gewinde ausgestattet sein kann. Nachdem der Sensorkopf 1 in den Adapter 3 eingeschraubt wurde, kann dann die auf den Sensorkopf aufgeschraubte Überwurfmutter 4 durch Drehung von außen gegen den Adapter 3 bewegt werden. Durch Festziehen der Überwurfmutter 4, so dass diese im Bereich des Sensorverbindungsabschnitts 3.1 eine gewisse Kraft auf den Adapter 3 ausübt, kann somit der Sensorkopf 1 zuverlässig an dem Adapter 3 gesichert werden. Auch der Sensorkopf 1 kann sich somit selbst bei länger andauernden Erschütterungen oder Vibrationen nicht von dem Adapter 3 lösen.

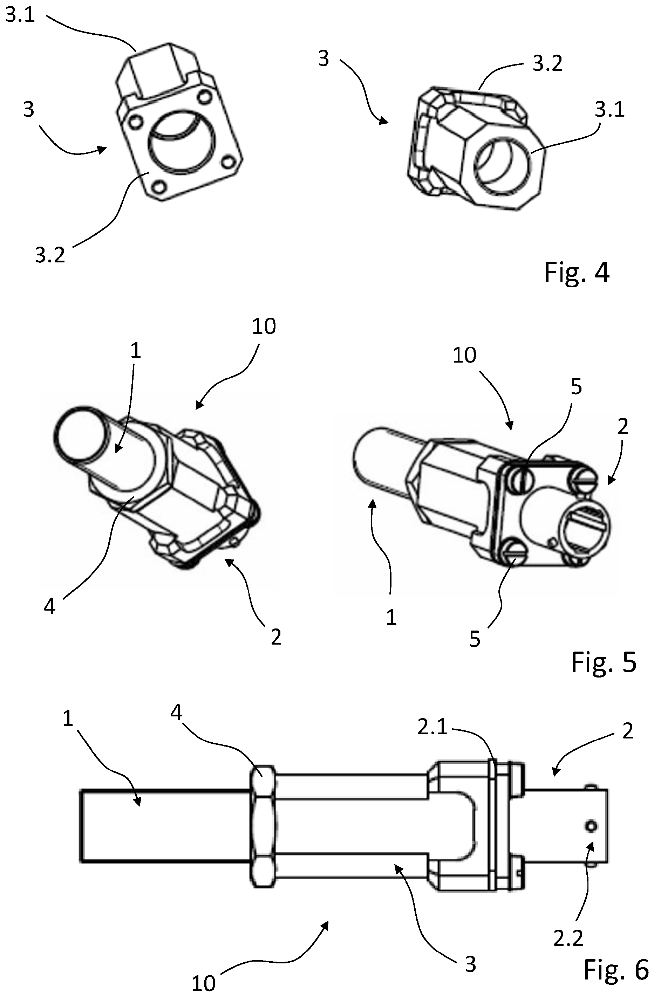

Die Ausgestaltung gemäß der Fig. 1 bis 3 unterscheidet sich von der Ausgestaltung gemäß der Fig. 4 bis 6 nur hinsichtlich der Geometrie des Adapters 3. Insofern wird im Hinblick auf die Verbindung des Adapters 3 mit dem Sensorkopf 1 und dem Stecker 2 auf Obenstehendes verwiesen. Der in den Darstellungen der Fig. 4 bis 6 gezeigte Adapter 3 ist von länglicher Geometrie, so dass der Sensorkopf 1 und der Stecker 2 in einer Achse liegen. Bei beiden Ausführungsbeispielen weist aber der Adapter 3 ansonsten im Querschnitt ein annähernd quadratisches Profil mit abgeschrägten Kanten und mit einem freien Innenquerschnitt auf. Der sich durch den Adapter erstreckende freie Innenquerschnitt verbindet den Steckerverbindungsabschnitt auf der einen Seite mit dem Sensorverbindungsabschnitt auf der anderen Seite und ermöglicht, dass das den Sensorkopf 1 mit dem Stecker 2 verbindende Kabel durch den Adapter 3 verläuft und durch diesen geschützt ist. Aufgrund der wasserdichten Verbindung des Sensorkopfes 1 und des Steckers 2 mit dem Adapter 3 schützt der Adapter 3 das Kabel sowie die Verbindungen des Kabels mit dem Sensorkopf 1 und dem Stecker 2 im Inneren des Adapters 3 vor Umwelteinflüssen und auch vor elektromagnetischen Einflüssen.

Die dargestellte Sensorvorrichtung 10 kann in einem militärischen Fahrzeug eingesetzt werden, das heißt, diese erfüllt insgesamt die einzuhaltenden Militärstandards. Die Darstellung der Fig. 7 zeigt nun schematisch ein Flussdiagramm mit einigen Schritten zur Herstellung der Sensorvorrichtung 10. Ein wichtiger Aspekt ist dabei, dass die Sensorvorrichtung 10 in einem militärischen Fahrzeug eingesetzt werden kann, der Sensorkopf 1 alleine aber eine solche Eignung nicht aufweist. Bei diesem handelt es sich vielmehr um einen preisgünstigen Industriesensorkopf.

Im Schritt S1 wird zunächst eine im zivilen oder im industriellen Bereich einsetzbare Sensoreinheit bereitgestellt. Diese ist zum Einsatz in einem militärischen Fahrzeug nicht geeignet, da sie nicht die erforderlichen Standards einhält. Allerdings ist diese Sensoreinheit dafür günstig zu beschaffen und in großer Stückzahl am Markt verfügbar. Die Sensoreinheit weist einen Sensorkopf 1 und einen Anschlussstecker auf, über den die Sensoreinheit an eine Verarbeitungseinheit angeschlossen werden kann. Sowohl der Sensorkopf 1 als auch der Anschlussstecker entsprechen keinem militärischen Standard.

Im Schritt S2 wird dann die Sensoreinheit in ihre Einzelteile zerlegt, das heißt, es wird insbesondere der Sensorkopf 1 demontiert. Dabei werden die mitunter vorgesehenen Kabel zwischen Sensorkopf 1 und Anschlussstecker voneinander getrennt, so dass am Ende der alleine in einem militärischen Fahrzeug nicht einsetzbare Sensorkopf 1 verbleibt.

Im Schritt S3 wird dann dieser Sensorkopf 1 mit einem neuen Stecker 2, der in einem militärischen Fahrzeug eingesetzt werden kann, verbunden. Die übrigen Komponenten der Sensoreinheit werden nicht weiter benötigt bzw. können anderweitig verwendet werden. Weiterhin werden dann der Stecker 2 und der Sensorkopf 1 gemäß Schritt S4 mit dem in den Darstellungen der Fig. 1 oder 4 dargestellten Adapter 3 verbunden.

Aufgrund der Stabilität des Adapters 3, der festen mechanischen Verbindung von Sensorkopf 1 und Stecker 2 mit dem Adapter 3 sowie auch aufgrund der Ausgestaltung des Steckers 2 als Sicherheitsstecker, der in einem militärischen Fahrzeug eingesetzt werden kann, kann schlussendlich die gesamte Sensorvorrichtung 10 in einem militärischen Fahrzeug eingesetzt werden. Es ist insofern möglich, eine preisgünstige industrielle Sensoreinheit als Ausgangsmaterial zur Herstellung einer in einem militärischen Fahrzeug einsetzbaren Sensorvorrichtung 10 zu verwenden. Dadurch lässt sich insgesamt auch die Sensorvorrichtung 10 vergleichsweise preisgünstig selbst herstellen. Am Markt verfügbare Sensorvorrichtungen 10, die in einem militärischen Fahrzeug eingesetzt werden können und die dahingehende Standards erfüllen, sind hingegen deutlich teurer.

### Bezugszeichen:

- 1: Sensorkopf
- 1.1: Einschraubabschnitt
- 2: Stecker
- 2.1: Verbindungsflansch
- 2.2: Anschlussabschnitt
- 2.3: Einsteckabschnitt
- 3: Adapter
- 3.1: Sensorverbindungsabschnitt
- 3.2: Steckerverbindungsabschnitt
- 4: Überwurfmutter
- 5: Schraube
- 10: Sensorvorrichtung

- S1: Verfahrensschritt
- S2: Verfahrensschritt
- S3: Verfahrensschritt
- S4: Verfahrensschritt

## Patentansprüche

1. Sensorvorrichtung zum Einsatz in einem militärischen Fahrzeug mit einem Sensorkopf (1) zur Erfassung einer Messgröße und einem mit dem Sensorkopf (1) kabelverbundenen Stecker (2) zum Anschluss an eine Verarbeitungseinheit,
**gekennzeichnet durch**
einen Adapter (3) zur mechanischen Adaption (3) des Sensorkopfes (1) an den Stecker (2).

2. Sensorvorrichtung nach Anspruch 1, **dadurch gekennzeichnet, dass** der Stecker (2) über den Adapter (3) mechanisch an den Sensorkopf (1) koppelbar ist.

3. Sensorvorrichtung nach einem der vorhergehenden Ansprüche,
**dadurch gekennzeichnet, dass** der Stecker (2) als Sicherheitsstecker ausgebildet ist.

4. Sensorvorrichtung nach einem der vorhergehenden Ansprüche,
**dadurch gekennzeichnet, dass** der Stecker (2) einem Militärstandard genügt.

5. Sensorvorrichtung nach einem der vorhergehenden Ansprüche,
**dadurch gekennzeichnet, dass** der Sensorkopf (1) ein ziviler oder ein industrieller Sensorkopf ist.

6. Sensorvorrichtung nach einem der vorhergehenden Ansprüche,
**dadurch gekennzeichnet, dass** der Adapter (3) einen Sensorverbindungsabschnitt (3.1) zur Verbindung mit dem Sensorkopf (1) und einen Steckerverbindungsabschnitt (3.2) zur Verbindung mit dem Stecker (2) aufweist, wobei der Sensorkopf (1) zur Verbindung mit dem Adapter (3) einen Einschraubabschnitt (1.1) aufweist, über den er in den Sensorverbindungsabschnitt (3.1) des Adapters (3) einschraubbar ist.

7. Sensorvorrichtung nach einem der vorhergehenden Ansprüche,
**dadurch gekennzeichnet, dass** der Sensorkopf (1) mittels einer Überwurfmutter (4) am Adapter (3) gesichert ist.

8. Sensorvorrichtung nach einem der vorhergehenden Ansprüche,
**dadurch gekennzeichnet, dass** der Stecker (2) auf den Adapter (1) aufgeschraubt ist.

9. Sensorvorrichtung nach einem der Ansprüche 6 bis 8, **dadurch gekennzeichnet, dass** der Steckerverbindungsabschnitt (3.2) als Flansch ausgebildet ist, wobei der Stecker (2) über eine Schraubverbindung mit dem Flansch verbindbar ist.

10. Sensorvorrichtung nach einem der vorhergehenden Ansprüche,
**dadurch gekennzeichnet, dass** die Kabel zur Verbindung des Sensorkopfes (1) und des Steckers (2) durch den Adapter (3) verlaufen.

11. Sensorvorrichtung nach einem der vorhergehenden Ansprüche,
**dadurch gekennzeichnet, dass** der Adapter (3) als Adaptergehäuse ausgebildet ist.

12. Sensorvorrichtung nach einem der vorhergehenden Ansprüche,
**dadurch gekennzeichnet, dass** der Sensorkopf (1) und der Stecker (2) in einer Achse liegen.

13. Sensorvorrichtung nach einem der Ansprüche 1 bis 11, **dadurch gekennzeichnet, dass** der Sensorkopf (1) und der Stecker (2) winkelig, insbesondere in einem rechten Winkel, zueinander angeordnet sind.

14. Verfahren zur Herstellung einer Sensorvorrichtung (10), insbesondere zur Herstellung einer Sensorvorrichtung (10) nach einem der vorhergehenden Ansprüche, umfassend die folgenden Schritte:
- Bereitstellen eines Sensorkopfes (1), insbesondere Bereitstellen einer Sensoreinheit mit einem Sensorkopf (1) und einem Anschlussstecker;
- Entfernen des Sensorkopfes (1) von dem Anschlussstecker;
- Bereitstellen eines Steckers (2), insbesondere eines Sicherheitssteckers;
- Bereitstellen eines Adapters (3) zur Adaption des Sensorkopfes (1) an den Stecker (2);
- Verbinden des Sensorkopfes (1) und des Steckers (3) über ein Kabel;
- Mechanisches Verbinden des Sensorkopfes(1) und des Steckers (2) mit dem Adapter (3).

15. Verwendung eines einem Industriestandard genügenden Sensorkopfes (1) in einem militärischen Fahrzeug, wobei der Sensorkopf (1) keinen Militärstandard erfüllt und wobei der Sensorkopf (1) über einen Adapter (3) mit einem Militärstecker verbunden ist.
